# EUROPEAN PATENT APPLICATION

(11) **EP 4 637 199 A1**
(43) Date of publication of application: **22.10.2025**
(21) Application number: 25170739.4
(22) Date of filing: 15.04.2025
(51) Int. Cl.: H04W 16/18, H04W 16/20, H04W 24/02

(54) **AUTOMATED DEPLOYMENTS**

(30) Priority: 19.04.2024 GB 202405528
(71) Applicant: IONX Networks Limited, Marlow, Buckinghamshire SL7 1EY (GB)
(72) Inventor: LODOLA, Domenico, Marlow, SL7 1EY (GB)
(74) Representative: D Young & Co LLP

(57) **Abstract**

A computer-implemented method for generating and evaluating a range of cell site deployment plans, the method comprising: obtaining a clutter location map comprising locations of buildings; obtaining an installation sites map comprising locations for possible cell sites; generating, using a model and the clutter location map, a signal propagation map for each of a plurality of possible cell sites from the installation sites map in a target deployment area; creating a plurality of deployment plans wherein each deployment plan comprises a different subset of the plurality of possible cell sites in the target deployment area; generating for each of the plurality of deployment plans a fitness score based on the signal propagation maps of the subset of the plurality of possible cell sites in the deployment plan.

## Description

### FIELD AND BACKGROUND

The present techniques relate to generating a cell site deployment plan. More particularly, but not exclusively, the disclosure describes a method, computer program and device which creates, and generates fitness scores for, a plurality of deployment plans based on an obtained map of clutter locations and an obtained map of possible cell sites.

In recent years the demands on mobile networks have steadily increased with consumers increasingly coming to expect consistent high performance levels with minimal signal interruptions or other connectivity issues.

One approach to ensure high and consistent network performance is by overprovisioning the network, typically by adding new cell sites to increase capacity. However, this approach requires significant investment to provide both in time and resource. Additionally, the present inventors have noted that obstacles can interfere with signal transmission from these cell sites, which can reduce the effectiveness of such an approach in real-world settings.

At least certain embodiments of the present disclosure address one or more of these problems as set out above.

### SUMMARY

Viewed from one perspective, there is provided a computer-implemented method for generating and evaluating a range of cell site deployment plans, the method comprising: obtaining a clutter location map comprising locations of buildings; obtaining an installation sites map comprising locations for possible cell sites; generating, using a model and the clutter location map, a signal propagation map for each of a plurality of possible cell sites from the installation sites map in a target deployment area; creating a plurality of deployment plans wherein each deployment plan comprises a different subset of the plurality of possible cell sites in the target deployment area; generating for each of the plurality of deployment plans a fitness score based on the signal propagation maps of the subset of the plurality of possible cell sites in the deployment plan.

In other words, the present approach can be considered an approach which is able to generate and evaluate a range of varied cell site deployment plans. It does so by obtaining geographic information on the locations of buildings and locations where cell site could be installed. The approach uses this information to model what the signal propagation would be if a cell was installed at each of these potential cell sites in isolation. Next the model creates a plurality of deployment plans which each select a subset of the potential cell sites and, by using the previously modelled signal propagations of the subset of potential cell sites, evaluates an overall fitness score for each of the plurality of deployment plans.

As identified by the present inventors, this approach allows an administrator of a network to automatically determine one or more deployment plans to add capacity to the network which would obtain good performance. Further, the above approach takes into account real-world clutter (obstacles) and therefore determines deployment plans which are likely to be effective in the actual conditions in which they would be employed. Yet further, by pre-computing the signal propagation maps for each of the possible cell sites in isolation, and then using these in combination for the fitness score computation for the plurality of deployment plans, the approach is computationally efficient as the signal propagation maps do not need to be re-computed. This is important as calculating the signal propagation maps is typically one of, if not the most, computationally intensive aspect of the approach.

Viewed from one perspective, there is provided a computer program for controlling a device to perform any of the above-described methods. In some examples, the computer program is encoded on a computer-readable medium

Viewed from one perspective, there is provided a device comprising: a processor and data storage, the device being configured to perform any of the above-described methods.

Other aspects will also become apparent upon review of the present disclosure, in particular upon review of the Brief Description of the Drawings, Detailed Description and Claims sections.

### BRIEF DESCRIPTION OF THE DRAWINGS

Examples of the disclosure will now be described, by way of example only, with reference to the accompanying drawings in which:
Figure 1: Schematically illustrates a clutter location map.
Figure 2: Schematically illustrates an installation sites map.
Figure 3: Schematically illustrates a method for generating and evaluating a range of cell site deployment plans.
Figure 4: Schematically illustrates a signal propagation map for a possible cell site.
Figure 5: Schematically illustrates a sampling grid for selecting a subset of possible cell sites for a deployment plan.
Figure 6: Schematically illustrates an example of an electronic device which can be used to implement teachings of the disclosure.

While the disclosure is susceptible to various modifications and alternative forms, specific example approaches are shown by way of example in the drawings and are herein described in detail. It should be understood however that the drawings and detailed description attached hereto are not intended to limit the disclosure to the particular form disclosed but rather the disclosure is to cover all modifications, equivalents and alternatives falling within the spirit and scope of the claimed invention.

It will be recognised that the features of the above-described examples of the disclosure can conveniently and interchangeably be used in any suitable combination.

### DETAILED DESCRIPTION

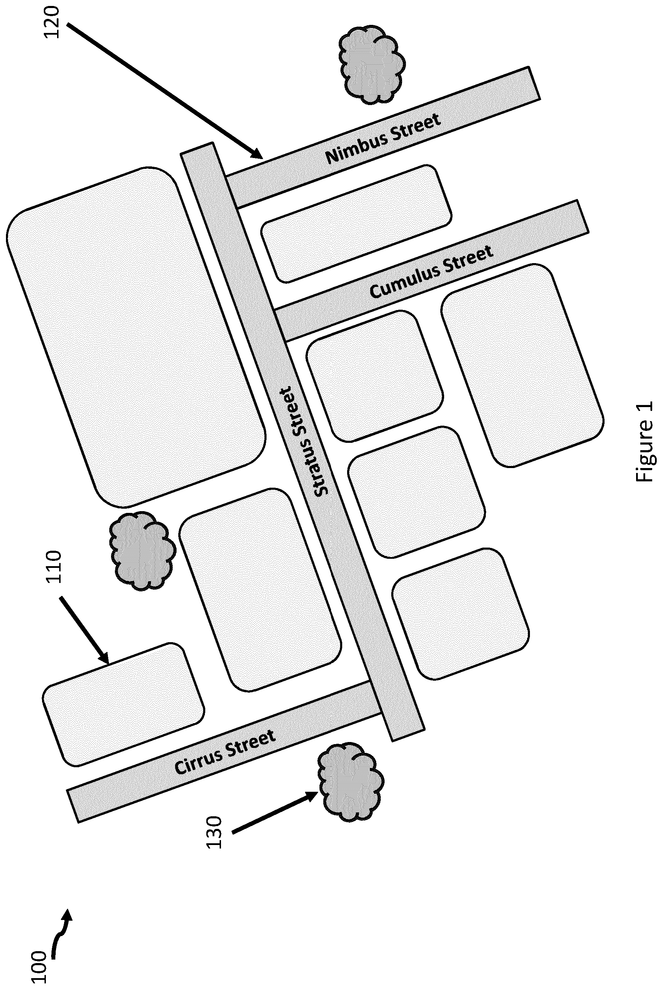

Figure 1 schematically illustrates a clutter location map which can be used in implementing teachings of the disclosure.

Figure 1 depicts a clutter location map 100 which depicts a plurality of buildings 110, a plurality of streets 120 and a plurality of vegetation, terrain and/or other obstacles 130. For clarity only one instance of each category of clutter is explicitly labelled but it will be appreciated that like symbols on the figure depict like elements.

As discussed in further detail below, the clutter location map 100 can be used in modelling signal propagation from possible cell sites taking into account the effect that the clutter present on clutter location map 100 has. For example, the plurality of buildings 110, can act to attenuate, reflect and/or refract signals.

While in figure 1 the clutter location map 100 is depicted with a plurality of streets 120 and a plurality of vegetation, terrain and/or other obstacles 130 it will be appreciated that in some examples only a plurality of buildings 110 is included. In other examples, the clutter location map 100 comprises locations of streets 120. Thereby, the modelling of signal propagation can take into account streets which can offer clear corridors where signals can propagate efficiently. In other examples, the clutter location map 100 comprises locations of vegetation, terrain and/or other physical obstacles 130. Thereby, the modelling of signal propagation can take into account vegetation, terrain and/or other physical obstacles which can act to attenuate, reflect and/or refract signals.

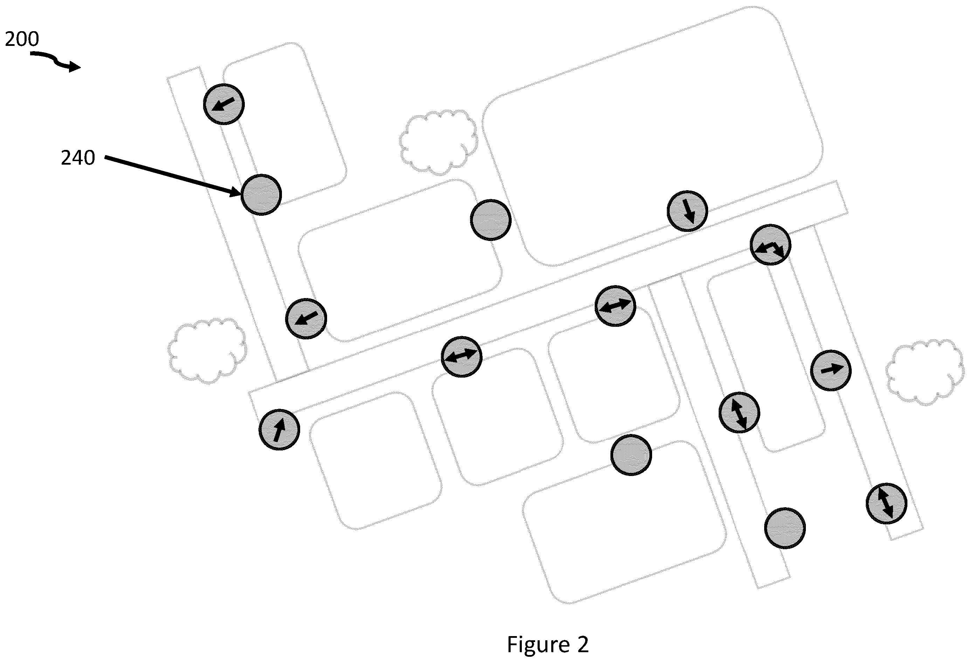

Figure 2 schematically illustrates an installation sites map which can be used in implementing teachings of the disclosure.

Figure 2 depicts an installation sites map 200 on which a plurality of locations for possible cell sites 240 are shown. For clarity only one possible cell site is explicitly labelled but it will be appreciated that like symbols on the figure depict like elements. In the depicted installation sites map some of the plurality of cell site 240 contain arrows. These arrows depict one or more orientation(s) associated with the cell sites. In addition, to see the correspondence with the clutter location map 100, the clutter from clutter location map 100 is shown as faded (light grey) elements. In the present example, the clutter is not included on the installation sites map and is just included for clarity. However, it will be appreciated, that while in the depicted examples the clutter sites map 100 and installation sites map 200 are depicted as separate maps, in other examples the information contained on each of these maps may be located on a single map and only a single map need be obtained to implement the teachings of the disclosure.

In some examples, the installation sites map 200 further comprises orientations for one or more of the possible cell sites 240. In figure 2, some of the possible cell sites are depicted as including orientation(s). It will be appreciated that in some examples no orientations are included on the installation sites map thereby simplifying the installation sites map and subsequent modelling of signal propagation. Where orientation are included for possible cell sites, this allows for the modelling of signal propagation to take into account the orientation of which (the antennas of) the possible cells sites would be mounted which can have a large effect on signal propagation and therefore enhances the accuracy of signal propagation.

In some examples, the installation sites map 200 includes two or more possible cell sites 240 at the same location with different orientations. In figure 2, some of the locations are depicted as including two orientations (shown as two arrows in the figure) of possible cell sites at the same location. Where multiple orientations are associated with the same location the techniques of the disclosure can, in some examples, treat these as two separate cell sites that happen to share a location, or alternatively, in some examples the techniques of the disclosure can treat these as a single combined cell site that propagates signal in two different orientations. Thereby, greater flexibility can be provided to the range of possible cell sites which can allow for a more efficient and/or realistic deployment plan to be determined. It will be appreciated that in some examples, more than two orientations can be associated with the same location thereby providing further flexibility.

In some examples, one or more of the orientations are randomly selected. Thereby a straightforward mechanism for generating possible orientations is provided. In some examples one or more of the orientations are selected based on a type of location. Thereby, the modelling can be limited to examples which include orientations which are realistic and/or efficient for the type of location (e.g. pointing away from a building a possible cell site is mounted to and/or along a street) thus reducing the risk of unworkable deployment plans and/or providing more performant deployment plans.

In some examples, the types of locations for possible cell sites comprise one or more utility poles and/or mounting locations on buildings. Thereby, convenient pre-existing locations can be utilised for possible cell sites. Furthermore, such locations may already have some or all of the necessary infrastructure to install the cell site already in place such as power and/or backhaul connectivity.

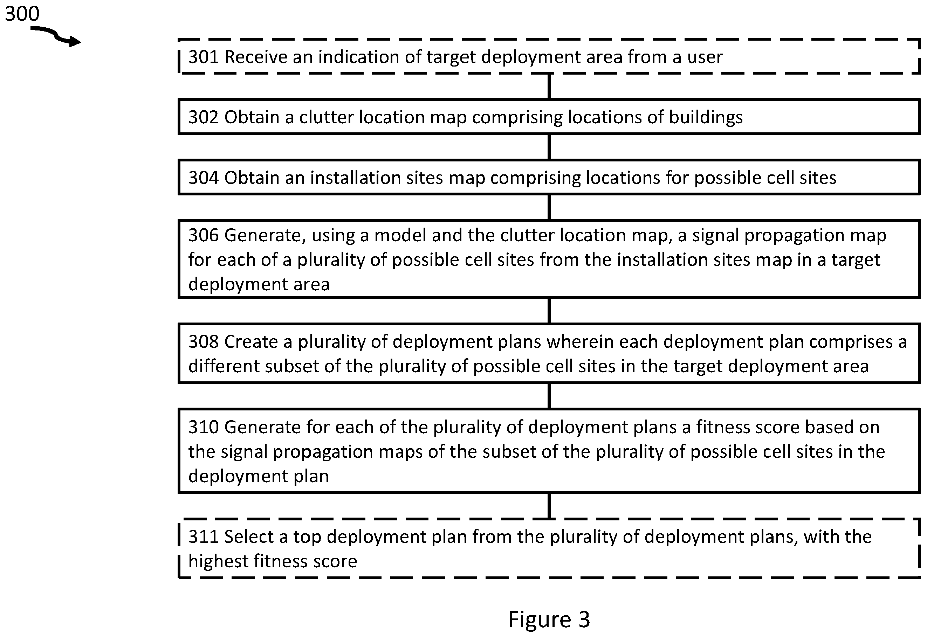

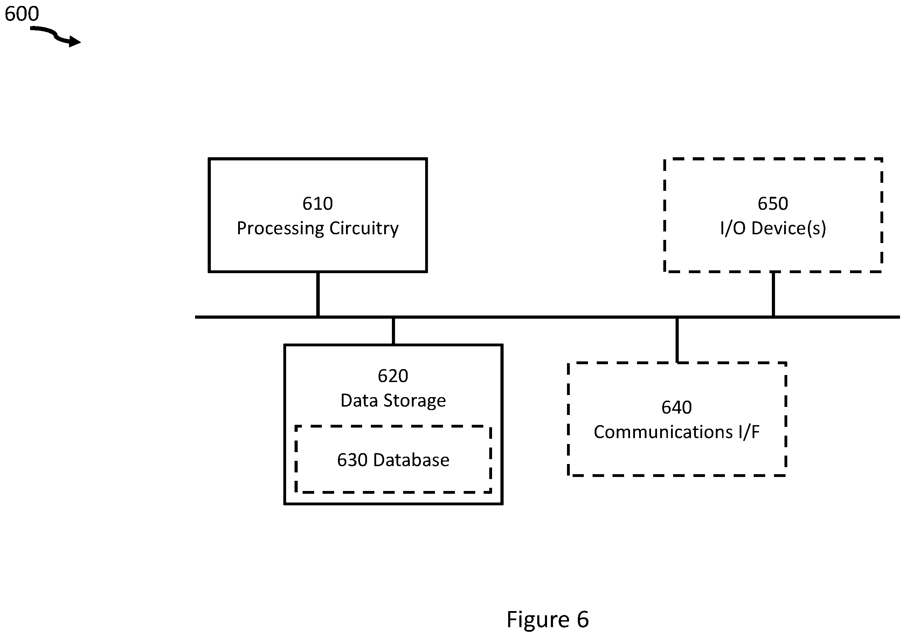

Figure 3 schematically illustrates a method 300 for generating and evaluating a range of cell site deployment plans. It will be appreciated that the method can be performed using the electronic device of figure 6. The method includes the following steps.

At step 302, the method obtains a clutter location map comprising locations of buildings. It will be appreciated that the clutter location map can be of the type discussed in relation to figure 1 above. The method then continues to step 304.

At step 304, the method obtains an installation sites map comprising locations for possible cell sites. It will be appreciated that the installation sites map can be of the type discussed in relation to figure 2 above. It will also be appreciated that, steps 302 and steps 304 can be performed in either order or simultaneously. It will also be appreciated that, in some examples the clutter location map and installation sites map can be combined such that only a single obtaining step is performed rather that separate steps 302 and 304 as depicted in the figure. Further, it will be appreciated that both the clutter location map and installation sites map can be retrieved from the same data source, e.g. a local or remote database. In other examples, the clutter location map and installation location map are retrieved from different locations, e.g. different local or remote databases. The method then continues to step 306.

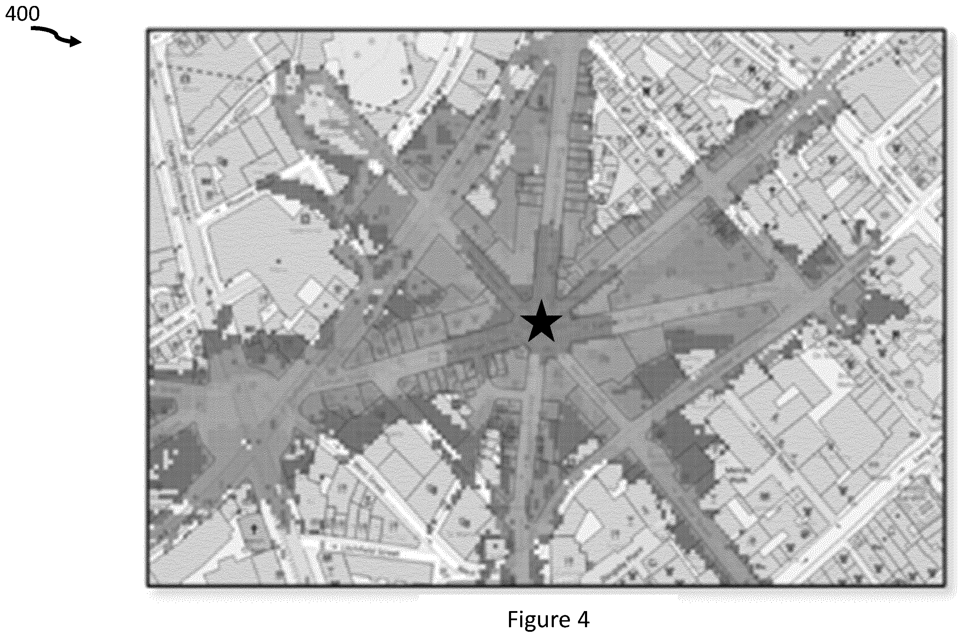

At step 306, the method generates, using a model and the clutter location map, a signal propagation map for each of a plurality of possible cell sites from the installation sites map in a target deployment area. An example of a signal propagation map for a possible cell site is shown in figure 4 which is discussed in further detail below. In some examples, the generating comprises selecting a model based on analysing the clutter location map. For example, certain models such as ITU Urban Macro Model as set out in Table Al-2 of ITU-R M.2135-1 (12/2009), hereby incorporated by reference, are more suitable for highly cluttered environments (e.g. urban) and certain models such as ITU Urban Rural Model as set out in Table Al-2 of ITU-R M.2135-1 (12/2009), hereby incorporated by reference, are more suitable for less cluttered environments (e.g. rural). Thereby by automatically selecting an appropriate model for the scenario encountered, the technique is able to generate more accurate signal propagation maps. In some examples, the model itself is the same for the different scenarios but the model parameters are varied. An example model parameter that can be varied is the modelling cell size where larger cells are used in rural environments. Altering cell size can be used to adjust the processing time as large cells reduce processing time and small cells increase processing time. In some examples, cell size is adjusted in accordance with the size of the target deployment area to keep processing time roughly constant or within certain bounds.

In some examples, the model is a ray tracing model which takes into account reflections and refractions with objects in the clutter locations map. Thereby a realistic model of how radio signals interact with objects in the environment can be provided. Where the model is a ray tracing model, model parameters include: maximum ray lengths, number of rays generated per cell, maximum number of reflections and refractions. These parameters can be varied based on analysis of the clutter environment with, for example, the maximum ray length being set dependent on the expected maximum cell coverage area and, for example, the maximum number of reflections and refractions being set based on the reflection/refraction losses from the types of clutter present.

The method then continues to step 308.

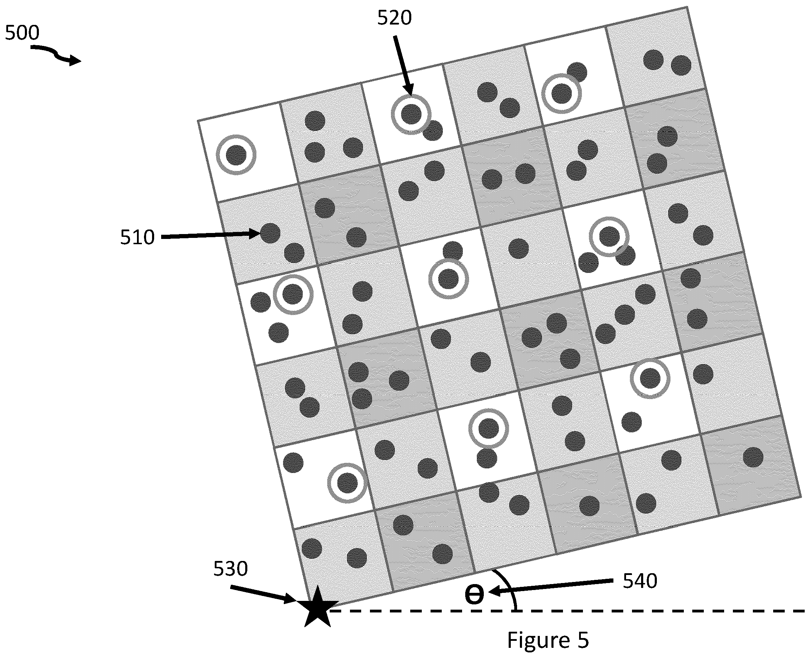

At step 308, the method creates a plurality of deployment plans wherein each deployment plan comprises a different subset of the plurality of possible cell sites in the target deployment area. An example of how a subset of possible cell sites can be selected to create a deployment plane is shown in figure 5 which is discussed in further detail below.

In some examples, two of the plurality of deployment plans comprise a different number of possible cell sites. Thereby, the method is able to test different numbers of possible cell sites which can allow for deployment plans which are more resource-efficient. Further, in some examples, the method is able to identify a "best" deployment plan for each of a different number of cell sites in the target area which can enable a network administrator to identify the marginal utility of each additional cell site and, for example, compare this to the cost of deploying an additional cell site.

In some examples, each subset of the plurality of possible cell sites is randomly selected. Thereby a simple and efficient mechanism to select possible cell sites is provided. From one perspective such techniques can be considered as a form of Monte Carlo simulation.

In some examples, each subset of the plurality of possible cell sites is selected using a sampling grid on the installation sites map. Thereby, an appropriate spacing of cell sites can be ensured (i.e. by avoiding selecting two cell sites from within a single sampling grid) and thereby the average quality of each deployment plan tested can be improved. This in turn can improve computational efficiency. In some examples, the sampling grid for each deployment plan uses a different origin and orientation for the sampling grid. Thereby, the method can avoid systematic biases in selecting subsets that can arise from using a fixed co-ordinate system which in turn can enhance the average quality of the tested deployment plans. An example of a technique for selecting a subset of the plurality of possible cell sites using a sampling grid is depicted in figure 5 and discussed in further detail below.

The method then continues to step 310.

At step 310, the method generates for each of the plurality of deployment plans a fitness score based on the signal propagation maps of the subset of the plurality of possible cell sites in the deployment plan.

In some examples, generating the fitness score combines the signal propagation maps of the subset of the plurality of possible cell sites in the deployment plan to determine the RSSI, RSRP, SINR and/or RSSNR in the target deployment area and wherein the fitness score is based on RSSI, RSRP, SINR and/or RSSNR in the target deployment area. Thereby the fitness scoring takes into account network characteristics which are of particular relevance to network experience.

In some examples, generating the fitness score for each of the deployment plans is further based on signal propagation maps of pre-existing cell sites (e.g. the pre-existing cell sites in one or more MNOs which operate in the target area). Thereby existing network infrastructure can be taken into effect when developing a deployment plan for new cell sites. From one perspective, this allows for the method to optimise the deployment plan for improvement over the existing status quo.

In some examples the signal propagation maps of pre-existing cell sites are generated using the model. Thereby the signal propagation can be generated in a uniform manner and further without a need to have access to measured values for the pre-existing cell sites. In other examples, the signal propagation maps of pre-existing cell sites are based on measured values. Thereby the amount of required calculation can be reduced and furthermore the signal propagation of existing cell sites can be based or real-world values. In some examples, where the signal propagation maps of pre-existing cell sites are based on measured values, these maps can be extrapolated from the measured values, for example, to estimate values where no measurement was made. In some examples, the fitness score is based on the number of possible cell sites in the deployment plan. In other words, for example, a penalty can be applied for using more cell sites. Thereby, an efficient deployment plan can be provided that minimises the resource cost needed to achieve a given fitness score. In some examples, the method can provide a top/best deployment plan for each of a different number of included cell sites.

In the depicted example method 300 then method ends after step 310. It will be appreciated that while the steps have been depicted as being performed in a particular order, the method can be performed in any order where the necessary input information is available prior to a step being performed. For example, step 308 can be performed before step 306 as long as it is performed after step 304.

In some examples, one or both of the optional steps 301, 311 can be performed. At step 301 the method receives an indication of the target deployment area from a user. Thereby the method allows for flexibility by allowing the user to easily specify / change the target deployment area. It will be appreciated that, where present, step 301 can be performed at any point in the method 300 as long as it is performed before step 306.

At step 311, the method selects a top deployment plan from the plurality of deployment plans, with the highest fitness score. Thereby the top/best deployment plan can be identified which in turn can be implemented by a network administrator.

Figure 4 schematically illustrates a signal propagation map 400 for a possible cell site (shown as a star). The signal propagation map can be of the type described above. The figure shows a signal propagation superimposed on a clutter location map showing a plurality of buildings and a plurality of streets. The figure shows that in some directions e.g. along streets, the signal propagates further. In other directions, e.g. when passing through buildings, the signal is rapidly attenuated.

Figure 5 schematically illustrates a sampling grid 500 for selecting a subset of possible cell sites for a deployment plan. The figure shows a plurality of possible cell sites 510, a plurality of possible cell sites selected for a deployment plan 520 (marked with rings around a plurality of possible cell sites 510), an origin of a sampling grid 530 and an orientation of the sampling grid 540. For clarity only one instance of a possible cell sites 510 and one instance of a possible cell site selected for a deployment plan 520 is explicitly labelled with the reference numeral but it will be appreciated that like symbols on the figure depict like elements.

In figure 5 a sampling grid is overlaid on a plurality of possible cell sites 510. The grid has an origin at 530 and has an orientation 540 determined by the angle Θ. In the particular sampling method employed in the figure nine grid cells are selected to ensure a minimum spacing of one grid cell separation in each of the two axes by alternating selection rows and selection columns. From within each selected cell, one possible cell site 510 is selected to form part of the subset of possible cell sites selected for a deployment plan 520. As discussed above, when generating a plurality of different deployment plans different origin points and orientations can be used. In addition, other selection criteria are explicitly contemplated, including different minimum/maximum spacings (e.g. different grid cell spacings or directly calculated minimum distances between selected possible cell sites) and different numbers of cell sites per selected grid cell (e.g. allowing for multiple cell sites in the same grid cell where they share a location and/or a maximum number of cell sites per grid cell higher than one without other restriction). In some examples, when generating a plurality of different deployment plans, different minimum/maximum spacings can additionally or alternatively be used. Thereby, sampling bias caused by a particular spacings could be avoided. In some examples, the minimum and/or maximum spacings can be set to a larger value in rural environments than urban environment to take account of the sparser network (utilisation) in rural environments.

Figure 6 schematically illustrates an example of an electronic device which can be used to implement teachings of the disclosure described above, including method 300.

The electronic device 600 has processing circuitry 610 for performing data processing in response to program instructions and data storage 620 for storing data and instructions to be processed by the processing circuitry 610. In some examples, the processing circuitry 610 includes one or more caches for caching recent data or instructions. The data storage 620 may have a database 630 which can, for example, store clutter location map(s), installation site map(s), deployment plan(s), and/or fitness scores. It will be appreciated that Figure 6 is merely an example of possible hardware that may be provided in the device and other components may also be provided. The device 600 may additionally or alternatively be provided with a communication interface 640 which can be used, for example, to obtain/receive clutter locations map(s) and/or installation site map(s) and can be used to send deployment plan(s), and/or fitness scores. The device 600 may additionally or alternatively be provided with one or more user input/output device(s) 650 to receive input from a user (e.g. parameters to determine information for optimising the throughput capacity) or to output information (e.g. a map of network throughput and/or service status) to a user.

The methods discussed above may be performed under control of a computer program executing on a device. Hence a computer program may comprise instructions for controlling a device to perform any of the methods discussed above. The program can be encoded in a computer-readable medium. A computer-readable medium may include non-transitory type media such as physical storage media including storage discs and solid state devices. A computer-readable medium may also or alternatively include transient media such as carrier signals and transmission media. A computer-readable storage medium is defined herein as a non-transitory memory device. A memory device includes memory space within a single physical storage device or memory space spread across multiple physical storage devices.

In the present application, the words "configured to..." are used to mean that an element of an apparatus has a configuration able to carry out the defined operation. In this context, a "configuration" means an arrangement or manner of interconnection of hardware or software. For example, the apparatus may have dedicated hardware which provides the defined operation, or a processor or other processing device may be programmed to perform the function. "Configured to" does not imply that the apparatus element needs to be changed in any way in order to provide the defined operation.

Although illustrative teachings of the disclosure have been described in detail herein with reference to the accompanying drawings, it is to be understood that the invention is not limited to those precise teachings, and that various changes and modifications can be effected therein by one skilled in the art without departing from the scope and spirit of the invention as defined by the appended claims.

Further examples of feature combinations taught by the present disclosure are set out in the following numbered clauses:
1. A computer-implemented method for generating and evaluating a range of cell site deployment plans, the method comprising:
   obtaining a clutter location map comprising locations of buildings;
   obtaining an installation sites map comprising locations for possible cell sites;
   generating, using a model and the clutter location map, a signal propagation map for each of a plurality of possible cell sites from the installation sites map in a target deployment area;
   creating a plurality of deployment plans wherein each deployment plan comprises a different subset of the plurality of possible cell sites in the target deployment area;
   generating for each of the plurality of deployment plans a fitness score based on the signal propagation maps of the subset of the plurality of possible cell sites in the deployment plan.
2. The method of clause 1, wherein the clutter location map comprises locations of streets.
3. The method of clause 1 or clause 2, wherein the clutter location map comprises locations of vegetation, terrain and/or other physical obstacles.
4. The method of any preceding clause, wherein the installation sites map further comprises orientations for one or more of the possible cell sites.
5. The method of clause 4, wherein the installation sites map includes two or more possible cell sites at the same location with different orientations.
6. The method of clause 4 or clause 5, wherein one or more of the orientations are randomly selected.
7. The method of any of clauses 4 to 6, wherein one or more of the orientations are selected based on a type of location.
8. The method of any preceding clause, wherein types of locations for possible cell sites comprise one or more utility poles and/or mounting locations on buildings.
9. The method of any preceding clause, wherein generating comprises selecting a model based on analysing the clutter location map.
10. The method of any preceding clause, wherein the model is a ray tracing model which takes into account reflections and refractions with objects in the clutter locations map.
11. The method of any preceding clause, wherein two of the plurality of deployment plans comprise a different number of possible cell sites.
12. The method of any preceding clause, wherein each subset of the plurality of possible cell sites is randomly selected.
13. The method of any preceding clause, wherein each subset of the plurality of possible cell sites is selected using a sampling grid on the installation sites map.
14. The method of clause 13, wherein the sampling grid for each deployment plan uses a different origin and orientation for the sampling grid.
15. The method of any preceding clause, wherein generating the fitness score combines the signal propagation maps of the subset of the plurality of possible cell sites in the deployment plan to determine the RSSI, RSRP, SINR and/or RSSNR in the target deployment area and wherein the fitness score is based on RSSI, RSRP, SINR and/or RSSNR in the target deployment area.
16. The method of any preceding clause, wherein generating the fitness score for each of the deployment plans is further based on signal propagation maps of pre-existing cell sites.
17. The method of clause 16, wherein the signal propagation maps of pre-existing cell sites are generated using the model.
18. The method of clause 16, wherein the signal propagation maps of pre-existing cell sites are based on measured values.
19. The method of any preceding clause, wherein the fitness score is based on the number of possible cell sites in the deployment plan.
20. The method of any preceding clause, further comprising, selecting a top deployment plan from the plurality of deployment plans, with the highest fitness score.
21. The method of any preceding clause, further comprising, receiving an indication of the target deployment area from a user.
22. A computer program to control a device to perform the method of any preceding clause.
23. At least one computer-readable medium comprising the computer program of clause 22.
24. A device comprising a processor and data storage, the device configured to perform the method of any of clauses 1 to 21.

## Claims

1. A computer-implemented method for generating and evaluating a range of cell site deployment plans, the method comprising:
obtaining a clutter location map comprising locations of buildings;
obtaining an installation sites map comprising locations for possible cell sites;
generating, using a model and the clutter location map, a signal propagation map for each of a plurality of possible cell sites from the installation sites map in a target deployment area;
creating a plurality of deployment plans wherein each deployment plan comprises a different subset of the plurality of possible cell sites in the target deployment area;
generating for each of the plurality of deployment plans a fitness score based on the signal propagation maps of the subset of the plurality of possible cell sites in the deployment plan.

2. The method of claim 1, wherein the clutter location map comprises locations of streets, vegetation, terrain and/or other physical obstacles.

3. The method of claim 1 or claim 2, wherein the installation sites map further comprises orientations for one or more of the possible cell sites.

4. The method of claim 3, wherein the installation sites map includes two or more possible cell sites at the same location with different orientations, for example, wherein one or more of the orientations are randomly selected, and/or wherein one or more of the orientations are selected based on a type of location.

5. The method of any preceding claim, wherein types of locations for possible cell sites comprise one or more utility poles and/or mounting locations on buildings.

6. The method of any preceding claim, wherein generating comprises selecting a model based on analysing the clutter location map.

7. The method of any preceding claim, wherein the model is a ray tracing model which takes into account reflections and refractions with objects in the clutter locations map.

8. The method of any preceding claim, wherein two of the plurality of deployment plans comprise a different number of possible cell sites.

9. The method of any preceding claim, wherein each subset of the plurality of possible cell sites is randomly selected.

10. The method of any preceding claim, wherein each subset of the plurality of possible cell sites is selected using a sampling grid on the installation sites map, for example, wherein the sampling grid for each deployment plan uses a different origin and orientation for the sampling grid.

11. The method of any preceding claim, wherein generating the fitness score combines the signal propagation maps of the subset of the plurality of possible cell sites in the deployment plan to determine the RSSI, RSRP, SINR and/or RSSNR in the target deployment area and wherein the fitness score is based on RSSI, RSRP, SINR and/or RSSNR in the target deployment area.

12. The method of any preceding claim, wherein generating the fitness score for each of the deployment plans is further based on signal propagation maps of pre-existing cell sites, for example, wherein the signal propagation maps of pre-existing cell sites are generated using the model or wherein the signal propagation maps of pre-existing cell sites are based on measured values.

13. The method of any preceding claim, wherein the fitness score is based on the number of possible cell sites in the deployment plan.

14. The method of any preceding claim, further comprising, selecting a top deployment plan from the plurality of deployment plans, with the highest fitness score, and/or receiving an indication of the target deployment area from a user.

15. A computer-readable medium comprising instructions which, when executed by a computer, cause the computer to carry out the method of any of claims 1 to 14.
